# FASCICULE DE BREVET EUROPEEN

(11) **EP 0 974 221 B1**
(45) Date de publication et mention de la délivrance du brevet: **03.08.2005**
(21) Numéro de dépôt: 98917307.5
(22) Date de dépôt: 03.04.1998
(51) Int. Cl.: H04M 1/27

(54) **DISPOSITIF DE COMMANDE VOCALE POUR RADIOTELEPHONE, NOTAMMENT POUR UTILISATION DANS UN VEHICULE AUTOMOBILE**
SPRACHGESTEUERTES FUNKTELEFON, INSBESONDERE FÜR EIN KRAFTFAHRZEUG
RADIOTELEPHONE VOICE CONTROL DEVICE, IN PARTICULAR FOR USE IN A MOTOR VEHICLE

(30) Priorité: 04.04.1997 FR 9704168
(43) Date de publication de la demande: 26.01.2000
(73) Titulaire: PARROT (Société Anonyme), 75003 Paris (FR)
(72) Inventeur: SEYDOUX, Henri, F-75011 Paris (FR); BESNARD, Nicolas, F-75019 Paris (FR)
(74) Mandataire: Dupuis-Latour, Dominique
(86) Numéro de dépôt international: PCT/FR1998/000687
(87) Numéro de publication internationale: WO 1998/045997

(56) Documents cités:
- US-A- 4 737 976
- US-A- 5 584 052
- PATENT ABSTRACTS OF JAPAN vol. 014, no. 230 (P-1048), 16 mai 1990 & JP 02 056600 A (RICOH CO LTD), 26 février 1990,
- PATENT ABSTRACTS OF JAPAN vol. 015, no. 110 (E-1046), 15 mars 1991 & JP 03 003540 A (MITSUBISHI MOTORS CORP), 9 janvier 1991,
- STROPE B ET AL: "A model of dynamic auditory perception and its application to robust speech recognition" , 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M , ISBN 0-7803-3192-3, 1996, NEW YORK, NY, USA, IEEE, USA, PAGE(S) 37 - 40 VOL. 1 XP002055580 cité dans la demande voir le document en entier

## Description

L'invention concerne le domaine des accessoires pour radiotéléphones.

Il concerne plus précisément l'utilisation des radiotéléphones en voiture, qui impose une ergonomie particulière en raison des contraintes de sécurité évidentes lorsqu'un tel appareil est utilisé dans un véhicule en déplacement.

L'un des buts de l'invention est, notamment, de permettre l'utilisation de moyens de composition automatique des numéros pour le radiotéléphone au moyen d'une commande vocale dans un véhicule.

Les radiotéléphones proposés sur le marché comportent tous des systèmes formant annuaire et composeur téléphonique, mais ces systèmes impliquent la manipulation de touches, le défilement de menus sur l'écran de l'afficheur, etc., qui les rendent en pratique malaisés à utiliser dans un véhicule.

De son côté, le EP-A-0 650 283 décrit un appareil portatif autonome formant annuaire et composeur téléphonique et comportant notamment des moyens de reconnaissance vocale propres à analyser un nom énoncé devant un microphone, adresser une mémoire de numéros d'appel sur le numéro associé au correspondant dont le nom a été énoncé, et produire une séquence de fréquences vocales (signaux DTMF) correspondant aux différents chiffres du numéro ainsi adressé.

Le US-A-4 737 976 enseigne un dispositif de ce type intégré à un radiotéléphone de voiture, pour permettre notamment l'utilisation de celui-ci en fonction "mains libres", sans qu'il soit besoin de saisir le combiné pour composer le numéro.

Une première difficulté, lorsque l'on veut procéder ainsi, est le niveau de bruit important dans l'habitacle du véhicule. En particulier, si l'on souhaite utiliser l'appareil en "mains libres" sans le détacher de son support, la distance importante entre le microphone et l'utilisateur entraînera un niveau relatif de bruit élevé qui rendra difficile l'extraction du signal utile noyé dans le bruit.

Le US-A-4 737 976 précité propose, à cet effet, de prévoir un étage suppresseur de bruit dynamique opérant par soustraction spectrale en amont de la reconnaissance vocale proprement dite. En pratique, ce dispositif présente des performances limitées lorsque l'on souhaite une reconnaissance fine (par exemple dans un fichier de signatures vocales comportant plusieurs dizaines, voire plus d'une centaine, de références) et dans un milieu très bruité, typique de l'environnement automobile, avec des caractéristiques spectrales non stationnaires, c'est-à-dire qui évoluent de manière imprévisible en fonction des conditions de conduite (passage sur des chaussées déformées ou pavées, autoradio en fonctionnement, etc.).

Une autre difficulté, toujours dans le cas où l'on souhaite utiliser l'appareil sans le détacher de son support, tient au fait que l'ergonomie devra en être particulièrement étudiée car l'appareil sera souvent trop loin pour que l'utilisateur puisse distinguer des messages sur l'afficheur du radiotéléphone ou appuyer sur tel ou tel bouton du clavier, tout au moins d'une façon qui ne soit pas dangereuse pour la conduite si le véhicule est en mouvement.

Ces deux contraintes majeures (niveau de bruit élevé et recherche d'une excellente ergonomie) n'ont pas permis jusqu'à présent l'utilisation en configuration totalement "mains libres" de radiotéléphones dans un véhicule de façon satisfaisante pour l'utilisateur et la sécurité de la conduite.

L'invention se propose de résoudre cette difficulté, en présentant un nouvel accessoire pour radiotéléphone qui autorise l'utilisation de ce dernier entièrement en mode "mains libres" de façon à la fois fiable (bonne extraction du signal en dépit du bruit élevé), simple et sûre (par une ergonomie élaborée).

On verra en particulier que l'on peut aboutir à une excellente ergonomie en réduisant les commandes à une unique touche (qui peut être éventuellement remplacé par un quelconque bouton du radiotéléphone), tout en permettant le pilotage d'un nombre important de fonctions de manière relativement intuitive, donc sans nécessiter un apprentissage fastidieux pour l'utilisateur.

Plus précisément, l'invention propose un dispositif de commande vocale pour radiotéléphone, notamment pour utilisation dans un véhicule automobile, comprenant : une mémoire de données, contenant une série de numéros d'appel de correspondants et, pour chaque numéro d'appel, au moins une information d'empreinte vocale associée ; un transducteur acoustique, propre à capter un nom de correspondant recherché, énoncé par l'utilisateur de l'appareil ; des moyens de reconnaissance vocale, propres à analyser le nom de correspondant capté par le transducteur et le transformer en une empreinte vocale associée ; des moyens d'adressage sélectif de la mémoire, comprenant des moyens associateurs, propres à retrouver dans la mémoire une information d'empreinte vocale correspondant à celle fournie par les moyens de reconnaissance vocale et, en cas de concordance, adresser la mémoire sur la position correspondante ; et des moyens, coopérant avec les moyens associateurs, pour appliquer aux circuits du radiotéléphone le numéro d'appel adressé.

Selon l'invention, les moyens de reconnaissance vocale : évaluent et mémorisent un niveau de bruit courant capté par le transducteur en l'absence de signal de parole ; en présence d'un signal de parole, soustraient du signal capté le niveau de bruit courant précédemment évalué ; et appliquent sur le signal résultant ainsi obtenu un algorithme de reconnaissance vocale du type DTW à reconnaissance de forme par programmation dynamique adaptée à la parole utilisant des fonctions d'extraction de paramètre dynamique, notamment un algorithme dynamique prédictif à masquage avant et/ou arrière et/ou fréquentiel.

Selon diverses caractéristiques avantageuses :
- le dispositif comprend une touche actionnée par l'utilisateur pour discriminer un signal de parole, et le signal capté par le transducteur est mémorisé en continu sur un intervalle de temps donné, de manière à opérer la reconnaissance vocale sur un laps de temps incluant la période d'actionnement de la touche et ledit intervalle de temps précédant immédiatement cet actionnement ;
- le dispositif comprend une touche actionnée par l'utilisateur pour discriminer un signal de parole, et la reconnaissance vocale est opérée sur un laps de temps s'achevant postérieurement à la fin de l'actionnement de la touche ;
- le dispositif comprend une touche actionnée par l'utilisateur et dont l'actionnement commande des fonctions de gestion du radiotéléphone comprenant le décrochage, le raccrochage et la bascule double appel ;
- le dispositif comprend des moyens pour lire au moins un répertoire interne du radiotéléphone, comparer les numéros d'appel de ce répertoire à ceux de ladite mémoire, mettre à jour cette mémoire en y ajoutant les numéros d'appel du répertoire qui y sont absents, faire prononcer à l'utilisateur les noms de correspondants associés à ces numéros ajoutés et mémoriser les empreintes vocales de ces noms ;
- dans une phase de confirmation, le dispositif discrimine et conserve en mémoire les empreintes vocales associées aux noms de correspondants de la mémoire, ou à des mots de vocabulaire de commandes vocales spécifiques, ayant donné lieu à une reconnaissance vocale réussie.

On va maintenant décrire un exemple de réalisation de l'invention, en référence aux dessins annexés.
La figure 1 montre schématiquement le radiotéléphone sur son support et les blocs fonctionnels de l'électronique qui lui est associée.
La figure 2 est un chronogramme permettant de décrire les séquences temporelles d'analyse du signal recueilli par le microphone.
La figure 3 est un diagramme d'états montrant l'enchaînement des différentes opérations exécutées par le dispositif de l'invention en fonction des actions exécutées par l'utilisateur.

Dans la suite, on va décrire l'invention sous la forme d'un circuit "add-on" interfacé à un adaptateur de voiture pour radiotéléphone : le radiotéléphone est un appareil portatif posé sur un support du véhicule et le fait de déposer le radiotéléphone sur ce support assure la connexion à un certain nombre de circuits, notamment pour le fonctionnement "mains libres", le raccordement à une antenne, l'alimentation par le réseau de bord du véhicule, etc.

Cette configuration n'est cependant pas limitative. L'invention peut être également mise en oeuvre avec un radiotéléphone "de voiture", où un certain nombre d'étages du radiotéléphone sont installés à demeure dans le véhicule avec un combiné à disposition du conducteur, ou encore avec une installation "mains libres" partiellement ou totalement intégrée au véhicule en première monte. Les circuits associés au téléphone "mains libres" peuvent également, en tout ou en partie, être intégrés au poste de radio de la voiture (l'affichage du téléphone étant alors remplacé par l'affichage sur la face avant de l'autoradio ou sur le tableau de bord du véhicule) ou au calculateur de bord du véhicule.

De même, bien que l'utilisation en voiture soit la principale utilisation visée de l'invention, compte tenu de ses performances à l'encontre du bruit et de son ergonomie bien adaptée, cette utilisation n'est pas limitative et l'invention peut être utilisée dans d'autres circonstances. On peut notamment appliquer l'invention à des radiotéléphones portables afin d'améliorer les performances de ceux-ci dans un environnement bruyant et simplifier leur utilisation, en particulier pour les utilisations répétitives, pour les personnes peu familières de la manipulation de ce genre d'appareils, les personnes handicapées, les utilisateurs intensifs, etc.

Dans le mode de réalisation illustré, un radiotéléphone portatif 10, d'un modèle connu et non modifié, typiquement un GSM 2 watts, est posé dans un support comprenant un berceau 20 recevant le radiotéléphone 10 et fixé par exemple à la planche de bord du véhicule par un support approprié 22. Le support 20 comporte en partie inférieure 24, de manière en elle-même connue, une connectique permettant d'accéder à un bus de données et à divers circuits (antenne, alimentation, etc.) du radiotéléphone afin de relier ce dernier, via un câble 26, à un adaptateur de voiture ou "car kit" 30.

L'adaptateur 30 est d'un type en lui-même connu et ne sera pas décrit en détail. Il est relié à un microphone 32 et à un haut-parleur 34 permettant de réaliser la fonction "mains libres", à une antenne extérieure éventuelle 36 et à une ligne d'alimentation 38 reliée au réseau de bord du véhicule.

A cet adaptateur de type connu est associé un circuit "add-on" 40, spécifique, permettant de mettre en oeuvre les fonctions de l'invention que l'on décrira par la suite.

Ce circuit 40 intègre les différents organes matériels et logiciels permettant de mettre en oeuvre les fonctions de l'invention, organes qui seront désignés ci-dessous par simplicité "le dispositif", quelle que soit leur forme de réalisation pratique effective.

Le circuit 40 est relié à l'adaptateur 30 par un bus d'interfaçage 42 comportant :
- une liaison au microphone 32,
- une liaison au haut-parleur 34,
- des lignes de masse et d'alimentation,
- une liaison numérique série aux circuits du GSM (via le câble 26),
- une liaison à une touche de commande.

La touche de commande mentionnée en dernier lieu est avantageusement une touche telle que celle illustrée en 44 disposée sur le support 20 et relié au circuit 40 via le câble 26.

Cette disposition n'est cependant pas nécessaire : la touche 44 peut se situer à un autre emplacement où elle pourra être commodément utilisée par le conducteur, par exemple intégrée à la planche de bord, au volant, à une commande de la colonne de direction, une commande au pied, etc.

Par ailleurs, cette touche spécifique n'est pas en elle-même indispensable ; il est possible - en variante ou en complément - d'utiliser l'une quelconque des touches du radiotéléphone pour assurer les mêmes fonctions. On verra en effet que, lorsque le radiotéléphone est posé sur son berceau, les touches de son clavier ne sont pas utilisées de sorte que, lorsque l'appareil est posé dans son support, il suffit de redéfinir le clavier en donnant à toutes les touches de radiotéléphone une fonction identique, à savoir la fonction de la touche spécifique 44 (lorsque l'appareil sera retiré de son berceau, le clavier retrouvera son fonctionnement normal avec la définition spécifique habituelle de chacune des touches). Dans la suite, on considérera une telle redéfinition des touches du clavier comme entièrement équivalente à l'utilisation de la touche spécifique 44 et chaque fois qu'il sera fait mention de cette touche, il faudra comprendre la possibilité de la remplacer par une touche du clavier redéfini.

On va maintenant décrire la mise en oeuvre des fonctions de l'invention, envisagée suivant divers aspects successifs :
- la reconnaissance vocale en milieu bruité,
- l'ergonomie "mains libres",
- la gestion des répertoires téléphoniques,
- l'apprentissage des empreintes vocales,
- la commande vocale des fonctions du radiotéléphone.

### 1°) Reconnaissance vocale en milieu bruité

Dans un véhicule en déplacement, le niveau de bruit est élevé, et ceci est d'autant plus gênant pour la reconnaissance vocale que l'on utilise un système "mains libres" dans lequel la distance entre la bouche de l'utilisateur et le microphone est élevée, et où ce dernier capte donc un bruit important.

On connaît des algorithmes pouvant, dans une certaine mesure, tenir compte du niveau de bruit, mais ces algorithmes ne sont cependant pas adaptés à de tels niveaux de bruit élevés dans lesquels le mot est "noyé" dans le bruit, l'algorithme nécessitant alors une puissance de calcul très importante, incompatible avec une reconnaissance vocale en temps réel par un circuit simple à microprocesseur. En effet, avec la quantité de bruit il est généralement nécessaire de calculer toutes les possibilités de reconnaissance de forme sans pouvoir faire de "suppositions" sur le début du mot. Ne pouvant pas estimer les débuts des mots, ces modèles sont très difficilement utilisables dans la réalité en raison de la quantité de calculs excessive qui serait en pratique nécessaire.

Ainsi, dans la thèse de Brian Strope intitulée "*A model of dynamic auditory perception and its application to robust speech recognition",* (B. Strope, Master's Thesis, Department of Electrical Engineering, UCLA, 1995) il est dit : "*An initial evaluation with a simple dynamic programming-based isolated word recognition system and a single talker was performed. A system was constructed that used an Itakura path constraint, and an Euclidean local distance metric excluding the undifferentiated c*_{*o*} *term. Clean templates were isolated from surrounding silence, but test tokens were not. As more noise is added, word isolation, or endpoint detection, becomes more difficult. To assess the robustness of the system it is, therefore, unrealistic to assume the temporal placement of the speech within the background noise is known*".

Il est alors proposé d'utiliser la programmation dynamique pour discriminer la parole d'avec le bruit. Mais cette solution implique une puissance de calcul importante, incompatible avec une reconnaissance vocale en temps réel comme cherche à l'obtenir la présente invention.

Pour pallier cette limitation, l'invention propose d'effectuer préalablement une estimation du bruit et de soustraire celle-ci au signal. Plus précisément, le bruit est capté en permanence par le microphone 32 et analysé par le dispositif de l'invention pour donner un spectre énergétique moyen pondéré du bruit, continûment réactualisé. Lorsque l'on souhaite opérer une reconnaissance vocale, par exemple lors d'un appui sur la touche 44 (on verra plus bas la façon particulière dont est utilisé l'appui sur cette touche), le dispositif analyse le signal capté par le microphone dans le domaine fréquentiel et soustrait du spectre de puissance ainsi obtenu le spectre de puissance du bruit antérieurement déterminé et mémorisé.

Le bruit d'intérieur d'une voiture étant fortement non stationnaire, une estimation continue de son niveau est nécessaire pour suivre toute ses variations. Cette estimation du bruit moyen sera utilisée lors de la soustraction spectrale de l'algorithme de reconnaissance vocale et elle est essentielle pour enlever le bruit de fond venant s'ajouter à la parole du locuteur.

On note Tₒ l'instant d'appui sur la touche 44 de déclenchement de la reconnaissance vocale, T₁ l'instant de fin de ce processus de reconnaissance et kₒ une marge temporelle de sûreté permettant au locuteur de parler jusqu'à kₒ secondes avant Tₒ (on précisera plus bas la manière dont les paramètres Tₒ, kₒ et T₁ sont déterminés par le système).

L'estimation du bruit moyen se fait séparément sur 16 bandes fréquentielles et en deux modes différents, l'estimation du niveau de bruit étant avantageusement réajustée en cours de reconnaissance si nécessaire :
a) Mode bruit : ce mode correspond à la période où la reconnaissance vocale n'est pas activée (avant Tₒ-kₒ et après T₁). Au cours de ce mode, on met à jour l'estimée de bruit indépendamment sur les 16 bandes, avec une constante de temps de 100 ms.
b) Mode reconnaissance vocale : ce mode correspond à la période où la reconnaissance vocale est activée (après Tₒ-kₒ jusqu'à T₁). Pendant ce mode, dans chaque bande fréquentielle l'estimée de l'amplitude spectrale n'est mise à jour que si sa variation par rapport à la trame précédente ne correspond pas à une augmentation de plus de 100 % en relatif. La constante de temps de mise à jour est toujours égale à 100 ms.

Grâce à ces deux modes de fonctionnement, l'estimation du bruit de fond est mise à jour non seulement pendant les période de temps de non-parole (avant l'appui sur la touche de déclenchement de la reconnaissance vocale) mais aussi en présence de parole. Cette technique permet de suivre divers scenarii de changement du niveau et des caractéristiques de bruit de fond, par exemple une augmentation ou une diminution de la vitesse, un changement des conditions acoustiques de la voiture (ouverture d'une fenêtre ou d'une porte), l'allumage ou l'extinction de l'autoradio, ou encore la présence de bruits extérieurs créés par d'autres voitures.

Ayant ainsi estimé le bruit moyen, on peut procéder à la reconnaissance vocale proprement dite.

Un paramètre fondamental de l'algorithme de détection de parole est le seuil d'énergie, qui est calculé de la façon suivante :
a) on calcule le maximum de l'amplitude spectrale, séparément sur chacune des 16 bandes fréquentielles et pendant les 20 dernières trames précédant Tₒ-kₒ.
b) pendant le mode de reconnaissance vocale, pour chaque trame et dans chacune des bandes, on soustrait l'estimée du bruit moyen du maximum précédemment calculé. Le seuil d'énergie est l'énergie associée au vecteur de dimension 16 obtenu.

En d'autres termes, on dispose d'un seuil d'énergie pour discriminer les phases de parole (parole bruitée) des phases de" silence" (silence bruité). Pour ce faire, on utilise un seuil ou décalage différentiel, ajouté au niveau d'énergie du bruit estimé comme indiqué plus haut, afin de discriminer la parole du silence. On peut ainsi déclencher la reconnaissance vocale avec des niveaux variables de bruit et pallier le défaut commun à nombre d'algorithmes de reconnaissance vocale, qui nécessitent une valeur arbitraire de seuil de l'énergie du signal pour discriminer le silence de la parole, notamment pour détecter les séparateurs de mots dans la succession de mots prononcés par l'utilisateur.

Plus précisément, les algorithmes de reconnaissance vocale comprennent classiquement une phase initiale d'extraction des paramètres suivie d'une phase de comparaison (reconnaissance proprement dite).

Le perfectionnement de l'invention porte essentiellement sur la phase d'extraction des paramètres, la phase de comparaison utilisant des algorithmes connus de type DTW (*Dynamic Time Warping*) ou HMM (*Hidden Markou Model*) qui ne seront pas décrits en détail.

Dans le cas de l'invention, l'extraction des paramètres se déroule comme suit :
a) pré-accentuation,
b) fenêtre de Hamming,
c) FFT (transformée rapide de Fourier),
d) calcul du logarithme de la puissance,
e) mise à l'échelle de Mel.
   Ces cinq étapes (a) à (e), qui reflètent une modélisation classique de l'oreille humaine, sont en elle-mêmes connues et ne seront pas décrites plus en détail. Dans le cadre de l'invention, elle sont exécutées en continu, par exemple par une circuit DSP (processeur numérique de signal) approprié, sur le signal capté, qu'il s'agisse du bruit ambiant ou d'un signal de parole bruité.
   Les étapes ci-dessous sont ensuite exécutées sur le signal de parole bruité :
f) soustraction du bruit (étape spécifique de l'invention, voir ci-dessus),
g) calcul de masquage, par exemple selon un algorithme dynamique prédictif à masquage avant et/ou arrière et/ou fréquentiel ; un tel algorithme est par exemple décrit par Brian Strope et Abeer Alwan, "A Model of Dynamic Auditory Perception and its Application to Robust Speech Recognition", *Proceedings of the IEEE ICASSP 1996,* Vol. 1, pp. 37-40, qui présente une caractéristique de "forward masking" (masquage avant) représentative d'un modèle psycho-acoustique dynamique de l'audition humaine,
h) calcul du cepstre (transformée en cosinus du spectre),
i) calcul du contraste du spectre,
j) extraction des paramètres les plus significatifs du cepstre.

Comme on l'a évoqué plus haut, pour différencier les périodes de "silence" (bruité) des périodes de parole, l'appui sur la touche 44 peut permettre d'indiquer sans ambiguïté au dispositif de l'invention qu'il y a lieu de procéder à une analyse d'une commande vocale - ce déclenchement avec la touche venant en complément ou en variante de la reconnaissance automatique par le seuil d'énergie, comme indiqué plus haut.

Le EP-A-0 650 283 décrit un mode de fonctionnement comparable : il s'agit d'un annuaire/composeur à reconnaissance vocale s'utilisant en prononçant le nom du correspondant recherché devant un microphone après avoir appuyé sur un bouton-poussoir. L'appareil recherche alors dans sa mémoire de données une "empreinte vocale" ressemblant à celle prononcée et présente sur un afficheur un numéro de téléphone associé, en énonçant simultanément dans un haut-parleur cette empreinte par synthèse vocale, en "écho". Si l'empreinte vocale reproduite en écho est bien celle recherchée, l'utilisateur "double clique" alors sur le bouton-poussoir, ce qui a pour effet de générer une séquence de fréquences vocales (DTMF) pour activer la composition du numéro en question.

En d'autres termes, la séquence d'utilisation est : *appuyer sur la touche ... dire le nom à reconnaître ... relâcher la touche* ... *écouter l'écho ... double cliquer pour confirmer et composer le numéro.*

Ou encore, en variante : *cliquer sur la touche ... dire le nom à reconnaître ... écouter l'écho ... double cliquer pour confirmer et composer le numéro* (l'instant de fin d'acquisition du signal étant géré en interne par l'algorithme de reconnaissance vocale).

Une telle séquence peut être utilisée dans le cadre du dispositif de l'invention.

Il est cependant possible de l'améliorer encore. Tout particulièrement dans le cas d'un conducteur de véhicule plus concentré sur la conduite que sur la commande du téléphone, il peut être difficile de synchroniser convenablement l'appui (et le cas échéant le relâchement) de la touche avec l'énonciation du mot à reconnaître. En effet, beaucoup d'utilisateurs sont nerveux et commencent à parler avant d'appuyer sur la touche ; de la même façon, les utilisateurs relâchent souvent la touche avant d'avoir fini d'énoncer le mot. Et il suffit de quelques fractions de seconde de décalage entre l'appui (et le cas échéant le relâchement) de la touche et l'énonciation du mot à reconnaître pour perturber profondément le dispositif et rendre difficile la reconnaissance correcte du mot prononcé.

Pour pallier cette difficulté, l'invention propose d'effectuer en continu l'acquisition du signal, qu'il s'agisse d'un silence bruité (pour estimer le niveau du bruit) ou d'une parole bruitée, et de conserver dans une mémoire une certaine quantité temporelle de signal, par exemple sur 1/8^{e} de seconde.

Lorsque l'utilisateur appuie sur la touche, le dispositif remonte dans le temps et inclut dans son analyse le 1/8^{e} de seconde précédant l'appui sur la touche (passé immédiat). De même, après relâchement de la touche (le cas échéant), le dispositif inclut dans son analyse le 1/8^{e} de seconde suivant le relâchement de la touche (futur immédiat). Un autre avantage de cette manière de procéder tient au fait que l'on dispose en permanence du signal pour faire une bonne approximation du bruit.

En d'autres termes, l'appui (et le cas échéant le relâchement) de la touche n'est pas considéré comme un signal de début (respectivement, de fin) de parole, mais comme une probabilité de début (de fin) de parole, l'analyse devant porter non seulement sur la période d'appui de la touche, mais également sur la fraction de signal mémorisée juste avant (et juste après) cette période.

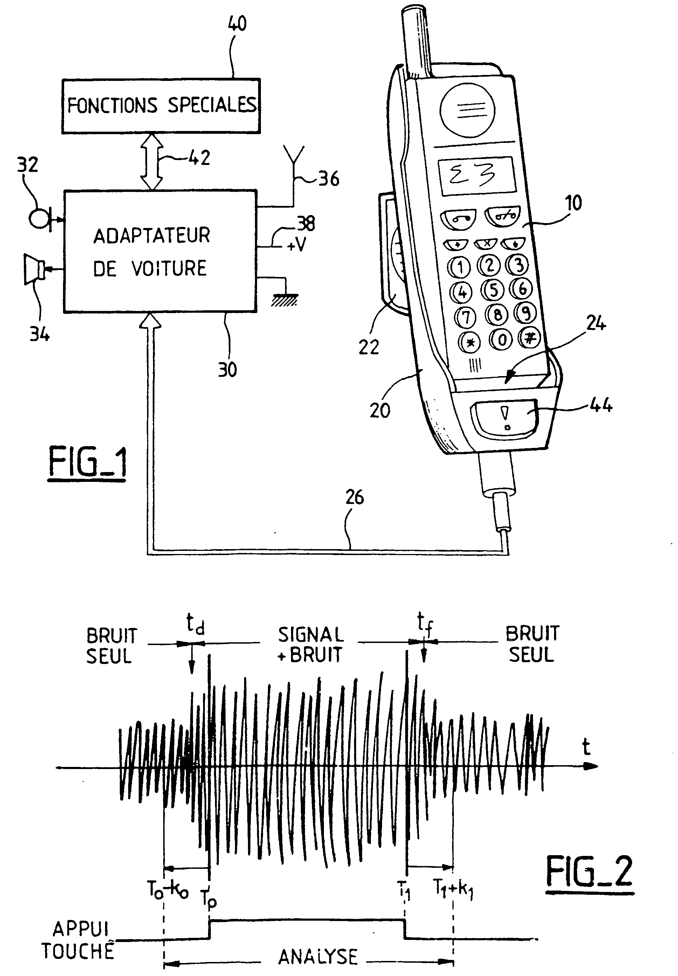

Sur la figure 2 on a représenté dans le domaine temporel le signal capté correspondant à l'énonciation d'un mot entre les instants de début t_{d} et de fin t_{f}.

Pour un utilisateur ne synchronisant pas correctement l'appui sur la touche avec l'énonciation du mot, l'appui sur la touche sera par exemple en Tₒ et le relâchement en T₁.

Dans ce cas, par précaution, l'analyse ne portera pas sur la période [Tₒ, T₁], mais sur la période [Tₒ-kₒ, T₁+k₁] afin d'être bien certain de couvrir complètement la période [t_{d}, t_{f}] représentative (k₀ et k₁ sont égaux ou différents, et sont typiquement de l'ordre d'une fraction de seconde, par exemple kₒ = k₁ = 1/8^{e} de seconde).

On peut distinguer trois états :
- la clé de contact est sortie : le dispositif de l'invention est inactif.
- la clé de contact est tournée : le dispositif est en mode d'acquisition et conserve en permanence le dernier 1/8^{e} de seconde du signal. À partir de ce signal mémorisé le dispositif évalue le bruit et met à jour le niveau correspondant, avant de remplacer la période de signal précédemment mémorisée par la nouvelle.

Comme indiqué plus haut, cette estimation du bruit permet d'améliorer considérablement les performances de l'algorithme de reconnaissance, et le fait d'appuyer sur la touche permet une discrimination aisée, d'origine externe, entre bruit et parole, améliorant ainsi grandement l'efficacité de l'algorithme.

Dans le mode de mise en oeuvre que l'on vient d'exposer, on demande à l'utilisateur de maintenir la touche enfoncée pendant toute la durée d'énonciation du mot, et on exploite donc les deux transitions du contact de la touche pour définir les instants Tₒ et T₁.

En variante, on peut n'utiliser la touche que pour définir l'instant Tₒ, en demandant à l'utilisateur de simplement "cliquer", c'est-à-dire exercer une action impulsionnelle sur la touche, au moment où il commence à énoncer le mot. Dans ce cas, l'instant T₁ (ou, plus précisément, T₁+k₁) de fin d'analyse est déterminé automatiquement par l'algorithme de reconnaissance vocale et correspondra à l'instant du "matching", c'est-à-dire à la fin de l'étape de comparaison du signal capté aux différentes empreintes mémorisées. Dans ce cas, la ligne "APPUI TOUCHE" du chronogramme de la figure 2 comprend une simple impulsion à l'instant Tₒ.

### 2°) Ergonomie "mains libres"

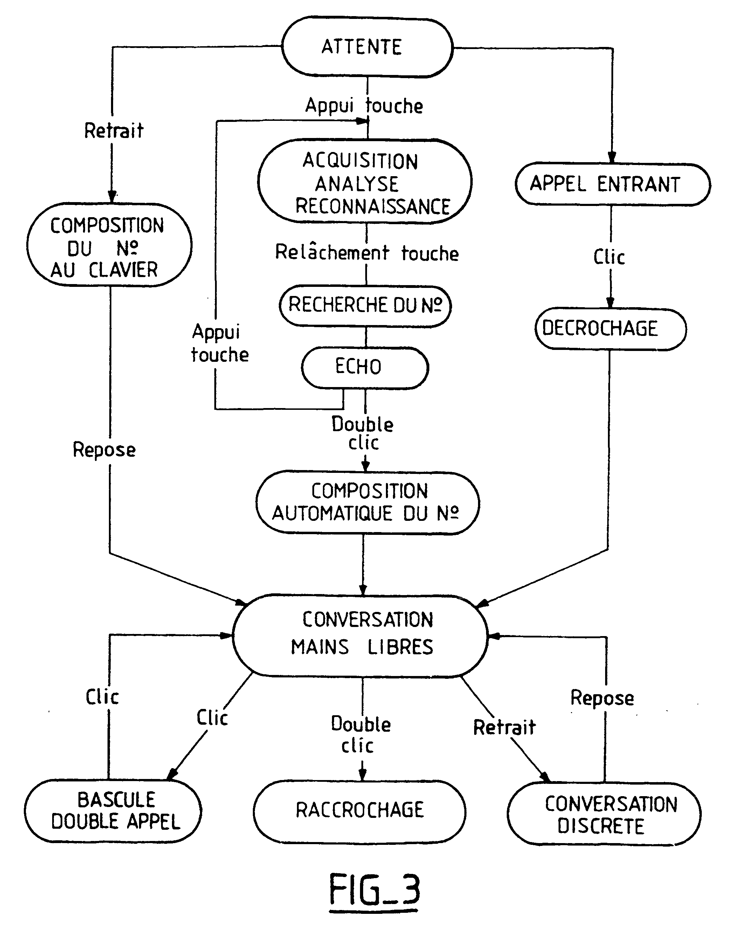

On va décrire, à l'aide de la figure 3, les différentes fonctions commandées par une touche unique grâce au dispositif de l'invention.

Ces fonctions, qui sont les principales fonctions à mettre en oeuvre sur un radiotéléphone, sont les suivantes :
- décrochage en cas d'appel entrant,
- raccrochage sur appel en cours,
- numérotation par reconnaissance vocale,
- numérotation par le clavier du téléphone,
- bascule entre deux correspondants en cas de double appel,
- bascule entre mode "mains libres" (utilisation du haut-parleur et du microphone de l'adaptateur de voiture) et mode "discret" (utilisation de l'écouteur et du microphone du radiotéléphone).

L'enchaînement de ces différentes fonctions est illustré figure 4. Ainsi :
- décrochage : en cas d'appel entrant, un appui sur la touche 44 (un "clic") commande le décrochage et permet d'entamer la conversation, en mode "mains libres".
- raccrochage : il peut être déclenché par un "double clic" sur la touche, si l'on souhaite commander ce raccrochage sans attendre que le correspondant ne raccroche de son côté.
- numérotation par reconnaissance vocale : on utilise la séquence indiquée plus haut : *appui sur la touche ... acquisition du signal, analyse du signal et comparaison ... relâchement de la touche ... recherche du numéro et énonciation en écho du nom trouvé ... double clic ... composition automatique du numéro.*
   La fin de la reconnaissance vocale dépend en fait de l'un des trois critères suivants : (i) relâchement de la touche, (ii) détection de silence (passage en dessous d'un seuil pendant un temps donné), (iii) fin du temps maximum alloué à la fenêtre d'analyse.
   On notera par ailleurs qu'en cas d'appel entrant pendant cette séquence, la reconnaissance est immédiatement interrompue, de manière à donner la priorité à cet appel : même si un nom a déjà été reconnu et que le dispositif attend la confirmation, celle-ci ne peut plus être réalisée ; le dispositif de reconnaissance vocale est inhibé et ne sera remis en service que lorsque le téléphone cessera de sonner ou que l'utilisateur mettra fin à la conversation.
- numérotation par le clavier du téléphone : pour ce faire, l'utilisateur retire le radiotéléphone du support et compose le numéro sur le clavier (ou choisit un numéro dans un répertoire du radiotéléphone). La numérotation est déclenchée normalement par appui de la touche appropriée du radiotéléphone. La conversation peut être établie et être poursuivie en mode "mains libres" lorsque le radiotéléphone est reposé sur son support.
- bascule double appel : lorsqu'un correspondant appelle et qu'une conversation est déjà en cours, un signal sonore ou un message vocal *« double appel »* est émis dans le haut-parleur du système.
   Un simple appui sur la touche 44 permet de passer d'un appel à l'autre. Pour mettre fin à l'un ou l'autre des appels, il suffit de faire un "double clic", comme indiqué plus haut.
- bascule du mode "mains libres" au mode "discret" : il suffit de retirer le radiotéléphone de son support, et inversement, pour passer d'un mode à l'autre.

### 3°) Gestion des répertoires

Un radiotéléphone contient un ou plusieurs répertoires téléphoniques internes, avec au moins un répertoire sur la carte SIM (au sens de la technologie GSM) et généralement au moins un répertoire propre au téléphone lui-même, indépendamment de la carte SIM. Ces répertoires seront collectivement appelés "le répertoire du radiotéléphone" dans la suite.

Le dispositif de l'invention comprenant lui-même un répertoire, auquel sont associées des empreintes vocales respectives, on se trouve donc en présence de deux répertoires : le répertoire du radiotéléphone et le répertoire du dispositif, intégré au circuit 40 (on appellera ce dernier "le répertoire de la voiture").

L'invention propose de synchroniser ces deux répertoires à chaque mise en place du radiotéléphone sur son support.

À la première utilisation, lorsque l'utilisateur dépose son radiotéléphone sur le support et met le contact, le dispositif de l'invention lit le contenu du répertoire du radiotéléphone via la prise reliée au connecteur du support, et établit une copie qui va être conservée dans le répertoire de la voiture.

Ensuite, le dispositif demande l'apprentissage du vocabulaire (voir plus bas) pour ces différents numéros lus, afin de conserver dans la mémoire du répertoire de la voiture au moins une empreinte vocale correspondant à chacun de ces numéros.

À chaque nouvelle mise en place ultérieure du radiotéléphone dans son support, le dispositif de l'invention réexamine le répertoire du radiotéléphone et, en cas de discordance, propose à l'utilisateur de mettre à jour le répertoire de la voiture.

Dans une variante avantageuse, le répertoire de la voiture comporte plusieurs sous-répertoires associés chacun à un utilisateur différent, l'utilisateur étant identifié par son numéro de radiotéléphone (lié à la carte SIM). Si, à la mise en place du radiotéléphone dans le support, le numéro de radiotéléphone lu dans la carte SIM n'est pas reconnu par le dispositif, celui-ci crée un sous-répertoire et procède de la même manière qu'indiqué plus pour la recopie du répertoire du radiotéléphone et l'apprentissage des empreintes vocales associées.

Si, en revanche, il reconnaît le numéro du radiotéléphone, alors il sélectionne celui des sous-répertoires correspondant à ce numéro et procède à la suite des opérations uniquement sur les numéros contenus dans ce sous-répertoire.

Ceci permet d'avoir avec une même voiture plusieurs utilisateurs habituels. Chaque utilisateur est automatiquement reconnu sans qu'il y ait de sélection particulière à effectuer, et le dispositif fonctionne ensuite comme si cet utilisateur était le seul utilisateur connu, notamment sans lui présenter les numéros propres aux autres utilisateurs.

### 4°) Apprentissage des empreintes vocales

Cette phase d'apprentissage s'applique aussi bien à l'apprentissage des empreintes des noms des correspondants du répertoire qu'à l'apprentissage d'éventuels mots d'un "vocabulaire" permettant de commander des fonctions particulières du radiotéléphone, comme on le verra plus bas (appel de messagerie, réglage du volume sonore, etc.). On utilisera le terme "mots" pour désigner aussi bien des noms de correspondants que des mots de vocabulaire.

Il est possible également de combiner des noms avec des mots de vocabulaire prédéfinis, par exemple un nom de correspondant et un mot-clef tel que *« maison », « bureau », « télécopie », « vacances », « portable »,* etc. Le nom devient alors : [nom + mot-clef facultatif]. Ces mots-clefs s'apprennent de la même manière que le vocabulaire de base du téléphone.

Il apparaît à l'expérience que la qualité de l'apprentissage est souvent mésestimée dans les dispositifs de reconnaissance vocale. En particulier :
- souvent l'utilisateur est novice au moment de l'apprentissage, et parle donc avec du stress dans la voix et des artefacts (hésitation, bruit de bouche, claquement de langue, etc.),
- le vocabulaire est parfois difficile et contient des noms proches,
- le vocabulaire contient parfois des mots courts difficiles à reconnaître.
L'invention propose d'effectuer l'apprentissage en plusieurs phases.

La première phase est une phase d'apprentissage initiale qui consiste, pour chacun des mots, à énoncer le mot correspondant, qui est ensuite répété en écho par le dispositif (dans le cas d'un mot de vocabulaire, ce mot peut en outre être affiché sur l'écran du radiotéléphone ou sur le tableau de bord).

De préférence, cet apprentissage préalable est effectué dans des conditions non bruitées, c'est-à-dire voiture arrêtée.

La seconde phase consiste à enregistrer une seconde empreinte de référence et vérifier la concordance avec la première.

Pour chacun des mots, le dispositif énonce le mot en mémoire et demande à l'utilisateur de le répéter. Ensuite, le dispositif calcule la distance (au sens des techniques de reconnaissance vocale) entre les deux empreintes. Si cette distance est inférieure à un seuil donné, les empreintes sont toutes deux conservées. Dans le cas contraire, la distance trop élevée résulte généralement d'un stress dans la voix ou d'un artefact tel qu'une syllabe d'hésitation (*« euh ... »*) ou un bruit de bouche, et cette anomalie est signalée à l'utilisateur afin qu'il procède à un nouvel enregistrement.

Facultativement, le dispositif vérifie également que la distance entre le nom ou le mot énoncé et les autres noms ou mots du répertoire est suffisamment grande, afin d'éviter toute confusion avec un nom ou mot déjà existant.

Facultativement, une phase supplémentaire peut être prévue pour tripler ou quadrupler les empreintes vocales mémorisées. Cette dernière phase peut se faire, de façon optionnelle, en tirant par exemple dans un ordre aléatoire un mot et en demandant à l'utilisateur de le répéter. Le dispositif vérifie alors que la reconnaissance s'est bien passée. En cas de distance trop grande entre les deux empreintes vocales, il reprend la phase d'apprentissage initial du mot et de réitération de cet apprentissage.

Avantageusement, pour détecter et éliminer plus sûrement les artefacts et les hésitations en début d'énonciation d'un mot ou d'un nom, le dispositif opère au préalable une comparaison particulière des débuts de mots en extrayant par exemple 1/8^{e} de seconde du début de chacun des deux mots enregistrés et en opérant le calcul de distance sur ces extraits pour déterminer la présence ou non d'un artefact.

On peut ainsi conserver un nombre important d'empreintes vocales, acquises pendant la phase initiale d'apprentissage puis dans les phases ultérieures de répétition pour vérification. Ces empreintes peuvent également être enregistrées pendant l'utilisation de la reconnaissance vocale, la recherche étant en fait réalisée par comparaison avec une pluralité d'empreintes, comme décrit dans le EP-A-0 650 283 précité, par exemple grâce à un comparateur vectoriel qui permet d'accélérer les divers calculs de reconnaissance vocale.

Cet enrichissement du vocabulaire peut être conditionné par un critère de "reconnaissance réussie". Ce critère comporte plusieurs sous-critères :
- tout d'abord, le niveau de bruit ne doit pas être trop important, sinon l'échantillon ne sera pas retenu comme nouvelle empreinte vocale ;
- pour indiquer au dispositif que le mot énoncé a fait l'objet d'une reconnaissance réussie, et conserver automatiquement celui-ci comme nouvelle empreinte vocale, on peut considérer que, lorsque la reconnaissance vocale a été suivie d'une numérotation autorisée par l'utilisateur (par un double clic sur la touche 44), l'échantillon est de bonne qualité et peut être conservé ;
- un sous-critère supplémentaire peut être l'établissement effectif d'une communication et la poursuite de cette communication pendant une durée significative, par exemple au moins une minute. On évite ainsi d'enregistrer les empreintes vocales nouvelles dans le cas où l'utilisateur, distrait, n'a pas prêté une attention suffisante à l'écho renvoyé par le dispositif et a déclenché la composition d'un numéro erroné.

Suite à chaque "reconnaissance réussie" conformément à ce critère, et dans le cas où il y a suffisamment de place dans la mémoire pour enrichir la base des données d'apprentissage, on ajoute à la base le mot prononcé, en tant que référence secondaire associée à la référence première (celle qui a été apprise la première fois) reconnue.

Indépendamment de la capacité mémoire, on prévoit un nombre maximum de références secondaires pour chaque référence première. La mémoire est gérée de manière à toujours conserver les références premières, et supprimer de la base d'apprentissage toute référence secondaire qui a donné lieu à une reconnaissance non réussie (au sens du critère ci-dessus).

Ces différentes règles de gestion de la base d'empreintes vocales permettent de la rendre dynamique et de l'adapter à l'environnement d'utilisation de l'appareil (niveau et type du bruit de fond) et à la nature du vocabulaire utilisé (nombre de mots de vocabulaire par rapport à la taille de la mémoire et fréquence d'utilisation de chaque mot de vocabulaire). Cette adaptation est importante pour la robustesse de l'algorithme :
- adaptation à l'environnement : si l'appareil est souvent utilisé en présence d'un certain type de bruit de fond, les références secondaires ajoutées à la base seront enregistrées avec ce bruit de fond et donc permettront une augmentation du taux de reconnaissance en présence de ce type de bruit.
- adaptation à la nature du vocabulaire : un utilisateur ayant peu de mots de vocabulaire par rapport à la taille de la mémoire bénéficiera de la possibilité d'ajout de beaucoup de références secondaires pour améliorer les performances de son appareil. Et un mot de vocabulaire fréquemment utilisé aura beaucoup de références secondaires associées et donc sa reconnaissance devient plus facile.

### 5°) Commande vocale des fonctions du radiotéléphone

Outre l'utilisation du dispositif pour la recherche d'un nom de correspondant dans un répertoire, il peut être avantageux de disposer d'un certain nombre de commandes vocales prédéfinies, par exemple *« appeler la messagerie », « supprimer les messages », « consommation », « plus fort »,* « *moins fort »*, etc.

Ces commandes vocales sont des commandes envoyées au radiotéléphone, ou des numéros de téléphone spéciaux permettant d'accéder à des services spécifiques (messagerie vocale, informations, réservation de taxi, etc.), ou encore des commandes destinées à l'adaptateur de voiture.

On peut également prévoir une commande avec un mot-clef tel que *« clavier »* permettant de passer en mode de numérotation par chiffres, le clavier numérique du téléphone étant alors réactivé.

Certaines de ces commandes vocales peuvent être également téléchargées par l'opérateur du service de radiotéléphonie, de la même manière qu'il est possible de télécharger des données dans la carte SIM ou dans le terminal du radiotéléphone.

Par ailleurs, le dispositif peut, via le connecteur de liaison du radiotéléphone dans son support, interroger les circuits internes du terminal et de la carte SIM pour reconnaître un certain nombre de paramètres telle que la langue de l'utilisateur (donnée stockée dans la carte SIM), qui pourra être utilisée pour faire fonctionner le dispositif dans cette langue, sans qu'il soit nécessaire de demander à l'utilisateur de préciser celle-ci), le niveau de restitution sonore programmé dans le radiotéléphone, etc.

Dans un autre perfectionnement avantageux de l'invention, les commandes vocales peuvent avoir été préalablement enregistrées par un corpus significatif de locuteurs, par exemple quatre hommes et quatre femmes pour chacune de langues possibles, et les empreintes vocales correspondantes conservées en mémoire non volatile. Lors de la première utilisation du mot, si ce mot est reconnu et après confirmation (ce qui par exemple résulte de l'envoi d'un appel avec décrochage maintenu pendant une durée minimale prédéterminée), l'empreinte vocale prononcée par l'utilisateur est conservée en mémoire. De cette façon, on élimine dans de nombreux cas le besoin d'une phase d'apprentissage, fastidieuse pour l'utilisateur.

## Revendications

1. Un dispositif (30, 40) de commande vocale pour radiotéléphone (10), notamment pour utilisation dans un véhicule automobile, comprenant:
- une mémoire de données, contenant une série de numéros d'appel de correspondants et, pour chaque numéro d'appel, au moins une information d'empreinte vocale associée,
- un transducteur acoustique (32), propre à capter un nom de correspondant recherché, énoncé par l'utilisateur de l'appareil,
- des moyens de reconnaissance vocale, propres à analyser le nom de correspondant capté par le transducteur et le transformer en une empreinte vocale associée,
- des moyens d'adressage sélectif de la mémoire, comprenant des moyens associateurs, propres à retrouver dans la mémoire une information d'empreinte vocale correspondant à celle fournie par les moyens de reconnaissance vocale et, en cas de concordance, adresser la mémoire sur la position correspondante, et
- des moyens, coopérant avec les moyens associateurs, pour appliquer aux circuits du radiotéléphone le numéro d'appel adressé,
**caractérisé en ce que** les moyens de reconnaissance vocale comportent :
- des moyens aptes à évaluer et mémoriser un niveau de bruit courant capté par le transducteur en l'absence de signal de parole, ce bruit étant capté en permanence par le transducteur acoustique et analysé pour donner un spectre énergétique moyen pondéré du bruit, continûment réactualisé,
- des moyens aptes, en présence d'un signal de parole, à soustraire du spectre de puissance du signal capté le spectre de puissance du bruit précédemment évalué, et
- des moyens aptes à appliquer sur le signal résultant ainsi obtenu un algorithme de reconnaissance vocale du type DTW à reconnaissance de forme par programmation dynamique adaptée à la parole utilisant des fonctions d'extraction de paramètre dynamique, notamment un algorithme dynamique prédictif à masquage avant et/ou arrière et/ou fréquentiel.

2. Le dispositif de la revendication 1, comprenant en outre des moyens pour lire au moins un répertoire interne du radiotéléphone, comparer les numéros d'appel de ce répertoire à ceux de ladite mémoire, mettre à jour cette mémoire en y ajoutant les numéros d'appel du répertoire qui y sont absents, faire prononcer à l'utilisateur les noms de correspondants associés à ces numéros ajoutés et mémoriser les empreintes vocales de ces noms.

3. Le dispositif de la revendication 1, comprenant en outre une touche (44) actionnée par l'utilisateur et dont l'actionnement commande des fonctions de gestion du radiotéléphone comprenant le décrochage, le raccrochage et la bascule double appel.

4. Le dispositif de la revendication 1, comprenant en outre une touche (44) actionnée par l'utilisateur pour discriminer un signal de parole, et dans lequel le signal capté par le transducteur est mémorisé en continu sur un intervalle de temps donné kₒ, de manière à opérer la reconnaissance vocale sur un laps de temps [Tₒ-kₒ, T₁+k₁] incluant la période d'actionnement de la touche [t_{d}, t_{f}] et ledit intervalle de temps kₒ précédant immédiatement cet actionnement.

5. Le dispositif de la revendication 1, comprenant en outre une touche (44) actionnée par l'utilisateur pour discriminer un signal de parole, et dans lequel la reconnaissance vocale est opérée sur un laps de temps [Tₒ-kₒ, T₁+k₁] s'achevant postérieurement à la fin t_{f} de l'actionnement de la touche.

6. Le dispositif de la revendication 1, dans lequel, dans une phase de confirmation, le dispositif discrimine et conserve en mémoire les empreintes vocales associées aux noms de correspondants de la mémoire, ou à des mots de vocabulaire de commandes vocales spécifiques, ayant donné lieu à une reconnaissance vocale réussie.

## Patentansprüche

1. Vorrichtung (30, 40) zur Sprachsteuerung für ein Funktelefon (10), insbesondere für die Verwendung in einem Kraftfahrzeug, aufweisend:
- einen Datenspeicher, welcher eine Reihe von Rufnummern von Teilnehmern enthält, und für jede Rufnummer mindestens eine zugehörige Sprachabdruckinformation,
- einen Schallwandler (32), der fähig ist, einen Namen des gesuchten Teilnehmers aufzunehmen, der durch den Benutzer des Geräts ausgesprochen wird,
- Spracherkennungsmittel, die geeignet sind, den Namen des Teilnehmers, der durch den Schallwandler aufgenommen wird, zu analysieren und ihn in einen zugehörigen Sprachabdruck umzuwandeln,
- selektive Adressiermittel des Speichers, welche Zuordnungsmittel umfassen, die fähig sind, in dem Speicher eine Sprachabdruckinformation wiederzufinden, entsprechend zu derjenigen, welche durch die Spracherkennungsmittel geliefert wird, und im Fall einer Übereinstimmung den Speicher auf die entsprechende Position zu adressieren, und
- Mittel, welche mit den Zuordnungsmitteln zusammenwirken, um an die Schaltkreise des Funktelefons die adressierte Rufnummer anzulegen,
**dadurch gekennzeichnet, dass** die Spracherkennungsmittel aufweisen:
- Mittel, die fähig sind, ein Geräuschniveau der Umgebung auszuwerten und zu speichern, das durch den Wandler bei Abwesenheit des Sprachsignals erfasst wird, wobei dieses Geräusch permanent durch den Schallwandler erfasst wird und analysiert wird, um ein mittleres, gewichtetes Energiespektrum des Geräuschs zu geben, das kontinuierlich wieder aktualisiert wird,
- Mittel, die bei Vorhandensein eines Sprachsignals fähig sind, vom Leistungsspektrum des erfassten Signals das Leistungsspektrum des zuvor ausgewerteten Geräuschs abzuziehen, und
- Mittel, die fähig sind, an das resultierende, so erhaltene Signal einen Spracherkennungsalgorithmus vom Typ DTW anzulegen mit Formerkennung durch dynamische Programmierung, die an die Sprache angepasst ist, unter Verwenden von Extraktionsfunktionen eines dynamischen Parameters, insbesondere eines dynamischen, voraussagenden Algorithmus mit vorne und/oder hinten und/oder frequentieller Überdeckung.

2. Vorrichtung nach Anspruch 1, aufweisend des Weiteren Mittel zum Lesen von mindestens einem inneren Verzeichnis des Funktelefons, Vergleichen der Rufnummern dieses Verzeichnisses mit denjenigen des Speichers, Aktualisieren dieses Speichers unter einem ihm Hinzufügen der Rufnummern des Verzeichnisses, welche dort nicht vorhanden sind, dem Benutzer die Namen der zugehörigen Teilnehmer zu diesen hinzugefügten Nummern anzugeben und Speichern der Sprachabdrucke dieser Namen.

3. Vorrichtung nach Anspruch 1, des Weiteren aufweisend eine Taste (44), welche durch den Benutzer betätigt wird, und deren Betätigung die Verwaltungsfunktionen des Funktelefons steuert, umfassend das Abheben, das Auflegen und die Umschaltung bei Doppelanruf.

4. Vorrichtung nach Anspruch 1, des Weiteren aufweisend eine Taste (44), welche durch den Benutzer betätigt wird, um ein Sprachsignal zu diskriminieren, und bei welcher das durch den Wandler erfasste Signal fortlaufend über ein gegebenes Zeitintervall k₀ derart gespeichert wird, dass die Spracherkennung über einen Zeitablauf [T₀ - k₀, T₁ + k₁] betrieben wird, einschließend die Betätigungsperiode der Taste [t_{d}, t_{f}] und das unmittelbar zu dieser Betätigung vorangegangene Zeitintervall k₀.

5. Vorrichtung nach Anspruch 1, des Weiteren aufweisend eine Taste (44), welche durch den Benutzer betätigt wird, um ein Sprachsignal zu diskriminieren, und bei welcher die Spracherkennung über einen Zeitablauf [T₀ - k₀, T₁ + k₁] betrieben wird, der nach dem Ende t_{f} der Betätigung der Taste zu Ende geht.

6. Vorrichtung nach Anspruch 1, in welcher in einer Bestätigungsphase die Vorrichtung im Speicher die Sprachabdrucke diskriminiert und beibehält, welche zu den Namen von Teilnehmern des Speichers gehören oder zu Wörtern des spezifischen Sprach-Steuer-Vokabulars, die für eine erfolgreich zustande gebrachte Spracherkennung Anlass gegeben haben.

## Claims

1. A voice control apparatus (30, 40) for a radiotelephone (10), in particular for use in a motor vehicle, comprising:
- a data memory containing a series of correspondents' call numbers and, for each call number, at least one associated voice print;
- a sound transducer (32) suitable for picking up the name of a desired correspondent as uttered by the user of the apparatus;
- voice recognition means suitable for analyzing the correspondent's name as picked up by the transducer and for transforming it into an associated voice print;
- selective memory addressing means including associative means suitable for finding a voice print in the memory corresponding to the print supplied by the voice recognition means, and in the event of a match, for addressing the corresponding memory position; and
- means co-operating with the associative means for applying the addressed call number to the radiotelephone circuits;
**characterized in that** the voice recognition means includes:
- means suitable for evaluating and storing a current noise level as picked up by the transducer in the absence of a speech signal, said noise being continuously picked up by the sound transducer and analyzed for giving a weighted mean power spectrum of the noise, continuously updated;
- means suitable for, in the presence of a speech signal, subtract the power spectrum of the previously evaluated noise from the power spectrum of the signal as picked up; and
- means suitable for applying to the resulting signal as obtained in this way a DTW type voice recognition algorithm with pattern recognition by dynamic programming adapted to speech using dynamic parameter extraction functions, in particular a predictive dynamic algorithm with forward and/or backward and/or frequency masking.

2. The apparatus of claim 1, further comprising means for reading at least one internal directory of the radiotelephone, for comparing the call numbers in said directory with those in said memory, for updating said memory by adding thereto the call numbers in the directory which are missing therefrom, for causing the user to utter the names of the correspondents associated with the added numbers, and for storing the voice prints of said names.

3. The apparatus of claim 1, further comprising a key (44) actuated by the user and whose actuation controls radiotelephone control functions including answering, hanging up, and swapping during call waiting.

4. The apparatus of claim 1, further comprising a key (44) actuated by the user to mark a speech signal, and in which the signal picked up by the transducer is stored continuously over a given time interval k₀ so as to perform voice recognition over a length of time [T₀-k₀, T₁+k₁] including the period during which said key is actuated [t_{d}, t_{f}] and said time interval k₀ immediately preceding said actuation.

5. The apparatus of claim 1, further comprising a key (44) actuated by the user to mark a speech signal, and in which voice recognition is performed over a length of time [T₀-k₀, T₁+k₁] terminating after the end t_{f} of actuation of the key.

6. The apparatus of claim 1, in which, in a confirmation stage, the apparatus identifies and conserves in memory voice prints associated with the correspondents' names in the memory or with words of a vocabulary of specific voice commands, whenever the voice prints give rise to successful voice recognition.
